# EUROPÄISCHE PATENTANMELDUNG

(11) **EP 4 446 261 A1**
(43) Veröffentlichungstag der Anmeldung: **16.10.2024**
(21) Anmeldenummer: 24159774.9
(22) Anmeldetag: 26.02.2024
(51) Int. Cl.: B65G 23/04, B65G 39/02, B65G 39/04, B65G 39/07

(54) **ACHSE BZW. WELLE**

(30) Priorität: 27.02.2023 DE 102023104701
(71) Anmelder: Schindler Holding GmbH & Co KG, 73655 Plüderhausen (DE)
(72) Erfinder: Schindler, Jens, 73655 Plüderhausen (DE)
(74) Vertreter: Hutzelmann, Gerhard

(57) **Zusammenfassung**

Achse (1) bzw. Welle, wobei die Achse (1) mit Öffnungen (2) und/oder Vertiefungen in radialer Richtung ausgerüstet ist.

## Beschreibung

Die Erfindung bezieht sich auf eine Achse bzw. Welle.

Diese Wellen werden oftmals für Transportbänder auch in Lebensmittel verarbeitenden Maschinen eingesetzt.

Hierzu sind auf den Achsen bzw. Wellen oftmals Buchsen aufgebracht, auf denen das Transportmedium geführt ist.

In allen Anwendungen ist es jedenfalls unabdingbar, daß die Wellen regelmäßig gereinigt und/oder gewartet werden können.

Bei bekannten Achsen bzw. Wellen ist es jedoch nicht möglich, ohne aufwendige Demontagearbeiten, auch den Zwischenraum zwischen der Achse und den Buchsen zu reinigen.

Aufgabe der Erfindung ist es daher, eine Möglichkeit zu schaffen, auch im eingebauten Zustand und ohne Demontagearbeiten auch diesen Zwischenraum reinigbar zu machen.

Diese Aufgabe wird erfindungsgemäß dadurch gelöst, daß die Achse mit Öffnungen und/oder Vertiefungen in radialer Richtung ausgerüstet ist.

Zwischen den Teilen der Achse kann beispielsweise Reinigungsmittel eingebracht und so der Zwischenraum gereinigt werden.

Dabei hat es sich als besonders vorteilhaft erwiesen, wenn die Ausnehmungen und/oder Vertiefungen in Längsrichtung der Achse ausgerichtet sind.

Hierdurch wird ein Freiraum geschaffen, der für die Reinigung genutzt werden kann.

Eine äußerst vorteilhafte Ausgestaltung der Erfindung liegt vor, wenn die Ausnehmungen und/oder Vertiefungen schlitzförmig ausgebildet sind.

Durch die schlitzförmige Ausgestaltung kann beispielsweise seitlich Reinigungsmittel eingebracht werden. Auch eine zentrale Einbringung für Reinigungsmittel ist denkbar.

Besonders vorteilhaft ist es erfindungsgemäß auch, wenn die Ausnehmungen und/oder Vertiefungen punktförmig ausgebildet sind, wobei mehrere zusammen in Längsrichtung der Achse ausgerichtet sind.

Hierdurch wird eine gute Verteilung von einzubringendem Reinigungsmittel über die Achse gewährleistet.

Als besonders vorteilhaft hat es sich erwiesen, wenn die Ausnehmungen und/oder Vertiefungen miteinander verbunden ausgebildet sind.

Dabei hat es sich als sehr vorteilhaft erwiesen, wenn die Verbindungen zu einem gemeinsamen Punkt der Achse, vorzugsweise an der Stirnseite der Achse führen.

Durch die Verbindung kann eine zentrale Reinigungsmittel Einbringung realisiert werden.

Weiterhin hat es sich als äußerst vorteilhaft erwiesen, wenn die Achse hohl ausgeführt ist.

Damit kann über die hohle Achse Reinigungsmittel eingebracht werden, welches durch die Ausnehmungen über die Achse verteilt wird.

Weiterhin hat es sich als besonders vorteilhaft erwiesen, wenn mindestens eine Hülse vorgesehen ist, die auf die Achse aufgeschoben ist.

Die Hülse lässt sich auf der Achse drehen und kann beispielsweise als Umlenkung für Transportbänder genutzt werden.

Dabei hat es sich als sehr vorteilhaft erwiesen, wenn die Hülse innen einen kreisförmigen, zur Achse korrespondierenden Querschnitt aufweist.

Hierdurch wird eine gute Drehbarkeit gewährleistet.

Eine sehr vorteilhafte Weiterbildung der Erfindung liegt auch darin, daß die Hülse innen einen in die Achse eingreifenden, d.h. in mindestens eine Ausnehmung und/oder Vertiefung eingreifenden Querschnitt aufweist.

Durch einen in die Achse eingreifenden Querschnitt können auch Kräfte zwischen Achse und Hülse übertragen werden, die zum Beispiel einen Antrieb von Transportbändern ermöglichen.

Dabei hat es sich als sehr vorteilhaft erwiesen, wenn ein Mitnehmer vorgesehen ist.

Ein solcher Mitnehmer kann sehr gut in eine Ausnehmung und/oder Vertiefung eingreifen. Diese kann lösbar ausgestaltet sein.

Weiterhin sehr vorteilhaft ist es erfindungsgemäß, wenn die Hülse auf der Achse drehbar gelagert ist.

Durch die Drehbarkeit wird ein sauberer Lauf der Hülse auf der Achse und damit eines beispielhaften Transportbandes ermöglicht.

Ebenfalls sehr vorteilhaft ist es erfindungsgemäß, wenn die Hülse auf der Achse hinsichtlich ihrer Drehbarkeit kraftschlüssig gelagert ist.

Hierdurch kann ein Antrieb realisiert werden.

Eine äußerst vorteilhafte Weiterbildung der Erfindung liegt auch vor, wenn die Hülse auf der Achse verschiebbar gelagert ist.

Durch ein Verschieben der Hülse auf der Achse kann sowohl Achse als auch Hülse nochmals besser gereinigt werden. Zudem kann die Hülse je nach Anwendung auf der Achse verschoben werden. Es lassen sich unterschiedliche Zusammenstellungen von Hülsen auf einer Achse realisieren.

Eine weitere sehr vorteilhafte Fortbildung der Erfindung liegt vor, wenn eine Sicherungseinrichtung zum Festlegen der Position der Hülse auf der Achse vorgesehen ist.

Hierdurch wird die jeweilige Hülse an einer definierten Position auf der Achse gehalten.

Dabei hat es sich erfindungsgemäß als sehr vorteilhaft erwiesen, wenn die Sicherungseinrichtung lösbar vorgesehen ist.

Dadurch kann die Hülse beispielsweise zum Reinigen sehr leicht verschoben werden. Hierzu wird die Sicherungseinrichtung gelöst.

Eine erfindungsgemäß sehr vorteilhafte Verwendung einer erfindungsgemäßen Achse liegt vor, wenn die Achse bzw. Welle in einem Transportband als Antriebs- und/oder Führungsachse bzw. Antriebswelle vorgesehen ist.

Hierdurch wird größtmögliche Flexibilität in dieser Anwendung erreicht.

Dabei hat es sich als sehr vorteilhaft erwiesen, wenn die Achse bzw. Welle in einer Lebensmittel verarbeitenden Anlage vorgesehen ist.

Gerade bei derartigen Anlagen ist eine sehr gute Reinigbarkeit wichtig. Diese ist durch die erfindungsgemäße Welle bzw. Achse gewährleistet.

Weiterhin hat es sich als sehr vorteilhaft erwiesen, wenn die Hülse, die Achse bzw. Welle vor allem in einem Zwischenraum zwischen diesen reinigbar ausgebildet ist.

Durch diese Reinigbarkeit ist gewährleistet, daß die Hygienevorschriften für Lebensmittelmaschinen sichergestellt werden können.

Im folgenden wird die Erfindung anhand mehrerer Ausführungsbeispiele veranschaulicht.

Dabei zeigen:
- Fig. 1: eine erfindungsgemäße Hohl-Achse mit mehreren in Längsrichtung verlaufenden Öffnungen und einer darauf gelagerten Hülse,
- Fig. 2: eine erfindungsgemäße Achse mit mehreren in Längsrichtung verlaufenden, radialen Vertiefungen und einer darauf gelagerten Hülse, und
- Fig. 3: eine Zusammenstellung mehrerer Hülsen auf zwei Achsen.

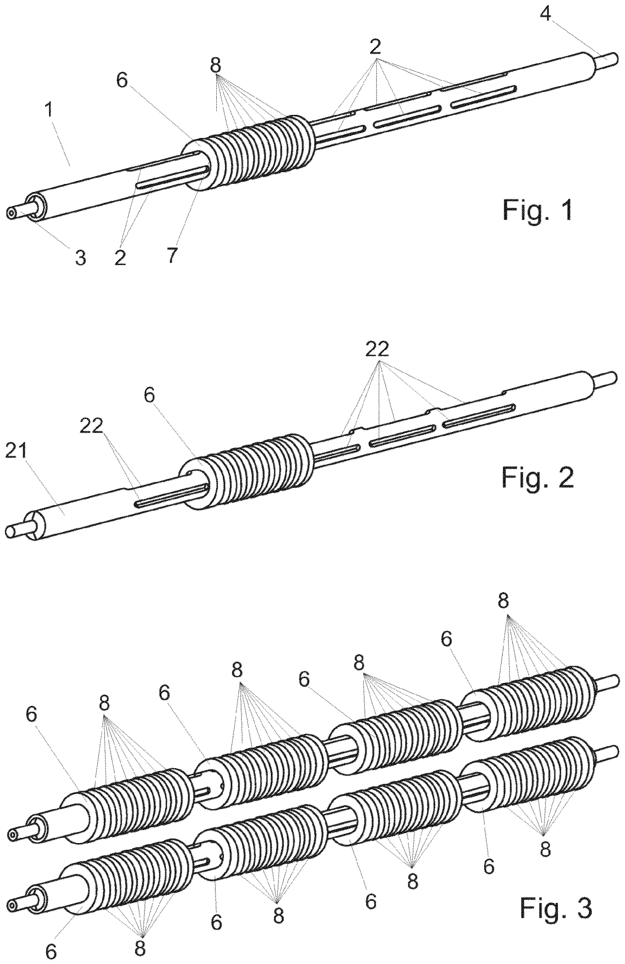

Mit 1 ist in Fig. 1 eine Achse bezeichnet, die hohl ausgeführt ist. In axialer Richtung sind am Umfang der Achse über annähernd die gesamte Länge der Achse 1 schlitzförmige Ausnehmungen 2 angeordnet. An den Enden der Achse 1 sind jeweils Lagerzapfen 3 bzw. 4 vorgesehen, mit deren Hilfe die Achse 1 in einer Maschinenanordnung drehbar oder starr gelagert werden kann.

Die Ausnehmungen 2 können mehrfach am Umfang vorgesehen sein. Andere Anordnungen sind denkbar. Es ist beispielsweise, daß die Ausnehmungen 2 einen verdrillten Verlauf aufweisen.

Auf der Achse 1 ist eine Hülse 6 angeordnet, deren Innenkontur 7 kreisförmig ausgebildet ist. Die Innenkontur 7 entspricht der Außenkontur der Achse 1, so daß die Hülse in radialer Richtung spielfrei auf der Achse gelagert ist.

Dennoch ist die Hülse 6 auf der Achse 1 verschiebbar.

Die Außenkontur der Hülse 6 weist in diesem Ausführungsbeispiel über den Umfang verlaufende Rillen 8 zur Aufnahme von Transportbänder auf.

Insgesamt kann sich somit sowohl die Achse 1 in ihrer Lagerung als auch die Hülse 6 auf der Achse 1 drehen.

Soll eine mit einer solchen Achse ausgerüstete Maschine nun gereinigt werden, ist es einerseits ein Leichtes, durch die Ausnehmungen 2 Reinigungsmittel auch auf die Innenseite der Innenkontur 7 der Hülse 6 aufzubringen. Dies erfolgt in Der Regel durch sprühen. Es ist ebenso denkbar, daß Reinigungsmittel durch die Hohlwelle eingeleitet wird und durch die Ausnehmungen 2 dann über die gesamte Achslänge die Innenkontur 7 der Hülsen benetzt.

Zudem kann die Hülse 6 auf der Achse 1 in axialer Richtung verschoben werden, so daß jeder Bereich der Achse 1 zugänglich und reinigbar ist.

Um ein unerwünschtes Verschieben der Hülse 6 auf der Achse 1 zu verhindern ist es denkbar, daß eine entsprechende Sicherung vorgesehen ist. Dies kann beispielsweise ein Klemmring auf der Achse sein. Auch eine maschinenseitige Vorrichtung ist hier denkbar. So kann maschinenseitig beispielsweise eine Art Kamm vorgesehen sein, der an den axialen Enden der Hülse oder auch in die Rillen eingreift und so ein verschieben verhindert. Ein solcher Kamm kann beispielsweise wegklappbar oder wegnehmbar sein.

Alternativ ist es denkbar, daß wie in Fig. 2 dargestellt, eine Voll-Achse 21 vorgesehen ist, die entlang ihres Umfanges in Längsrichtung ausgerichtete schlitzförmige Vertiefungen 22 aufweist. Durch diese Vertiefungen 22 kann ebenfalls Reinigungsmittel eingebracht werden. Die Vertiefungen 22 können beispielsweise durch Kanäle miteinander verbunden sein, so daß auch hier eine zentrale Einbringung von Reinigungsmittel denkbar ist.

Die erfindungsgemäße Ausgestaltung der Achsen ermöglicht aber auch eine wahlweise Verwendung als Wellen, die Drehmoment auf Transportbänder übertragen können.

Hierzu sind sind die Hülsen 6 mit einem nicht dargestellten Mitnehmer ausgerüstet, der in die Ausnehmungen 2 bzw. Vertiefungen 22 einzugreifen vermag. Im einfachsten Fall ist dieser Mitnehmer eine Schraube, ein Splint oder dergleichen.

Hierdurch wird Drehmoment zwischen der Welle 1 bzw. 21 und der Hülse 6 übertragen.

Auch hier lässt sich auch auf der Innenseite 7 der Hülse 6 Reinigungsmittel aufbringen. Durch Verschieben der Hülse 6 ist die Welle 1 als auch die Innenseite der Hülse 6 sehr gut reinigbar.

Durch entsprechende Kombination von Hülsen 6 mit und ohne Mitnehmer kann eine Achswelle geschaffen werden, die sowohl als Umlenkung und gleichzeitig auch als Antrieb dienen kann.

Selbst unterschiedliche Geschwindigkeiten der Umlenkung und des Antriebes sind denkbar.

Die Konfiguration einer solchen Achswelle muss auch nicht vorher festgelegt werden. Ausschließlich durch die entsprechende Kombination von Hülsen 6 mit und ohne Mitnehmer wird die Konfiguration festgelegt. Hierzu werden die Achswellen, aber auch die Hülsen 6 als Standardteile bereitgestellt und dann je nach Einsatzzweck entsprechend konfiguriert.

Eine beispielhafte Konfiguration ist in Fig. 3 gezeigt.

Hier ist ein Achswellenpaar dargestellt, welches sowohl Antriebswelle als auch Umlenkachse ist.

Unterschiedliche Ausführungen der einzelnen Hülsen 6 beispielsweise hinsichtlich ihrer äußeren Oberfläche, der vorgesehenen Nuten 8 oder dergleichen sind denkbar.

Insgesamt wird ein sehr gut reinigbares und sehr flexibel einsetzbares System geschaffen, welches gerade in Lebensmittelmaschinen die entsprechenden Hygieneanforderungen sicherstellen kann.

Die Achsen können durch bekannte Fügeverfahren hergestellt sein. So können die einzelnen Teile durch Schweißen, Löten, Laserschweißen, Kleben, Schrauben oder dergleichen zusammengefügt sein. Die Ausnehmungen 2 bzw. die Vertiefungen 22 können durch klassischen Materialabtrag, oder aber auch durch Laserschneiden oder dergleichen erzeugt sein.

## Patentansprüche

1. Achse (1) bzw. Welle, **dadurch gekennzeichnet, daß** die Achse (1) mit Öffnungen (2) und/oder Vertiefungen (22) in radialer Richtung ausgerüstet ist.

2. Achse nach Anspruch 1, **dadurch gekennzeichnet, daß** die Ausnehmungen (2) und/oder Vertiefungen (22) zumindest weitgehend in Längsrichtung oder in Längsrichtung der Achse (1) ausgerichtet sind.

3. Achse nach Anspruch 1 oder 2, **dadurch gekennzeichnet, daß** die Ausnehmungen (2) und/oder Vertiefungen (22) schlitzförmig ausgebildet sind.

4. Achse nach Anspruch 1 oder 2, **dadurch gekennzeichnet, daß** die Ausnehmungen (2) und/oder Vertiefungen (22) punktförmig ausgebildet sind, wobei mehrere zusammen in Längsrichtung der Achse (1) ausgerichtet sind.

5. Achse nach einem der vorangehenden Ansprüche, **dadurch gekennzeichnet, daß** die Ausnehmungen (2) und/oder Vertiefungen (22) miteinander verbunden ausgebildet sind.

6. Achse nach Anspruch 5, **dadurch gekennzeichnet, daß** die Verbindungen zu einem gemeinsamen Punkt der Achse, vorzugsweise an der Stirnseite der Achse führen.

7. Achse nach einem der vorangehenden Ansprüche, **dadurch gekennzeichnet, daß** die Achse (1) hohl ausgeführt ist.

8. Achse nach einem der vorangehenden Ansprüche, **dadurch gekennzeichnet, daß** mindestens eine Hülse (6) vorgesehen ist, die auf die Achse (1) aufgeschoben ist.

9. Achse nach einem der vorangehenden Ansprüche, **dadurch gekennzeichnet, daß** die Hülse (6) innen einen kreisförmigen, zur Achse (1) korrespondierenden Querschnitt aufweist.

10. Achse nach einem der vorangehenden Ansprüche, **dadurch gekennzeichnet, daß** die Hülse (6) innen einen in die Achse (1), d.h. in mindestens eine Ausnehmung (2) und/oder Vertiefung (22) eingreifenden Querschnitt aufweist.

11. Achse nach Anspruch 10, **dadurch gekennzeichnet, daß** ein Mitnehmer vorgesehen ist.

12. Achse nach einem der vorangehenden Ansprüche, **dadurch gekennzeichnet, daß** die Hülse (6) auf der Achse (1) drehbar gelagert ist.

13. Achse nach einem der vorangehenden Ansprüche, **dadurch gekennzeichnet, daß** die Hülse (6) auf der Achse (1) hinsichtlich ihrer Drehbarkeit kraftschlüssig gelagert ist.

14. Achse nach einem der vorangehenden Ansprüche, **dadurch gekennzeichnet, daß** die Hülse (6) auf der Achse (1) verschiebbar gelagert ist.

15. Achse nach einem der vorangehenden Ansprüche, **dadurch gekennzeichnet, daß** eine Sicherungseinrichtung zum Festlegen der Position der Hülse (6) auf der Achse (1) vorgesehen ist.

16. Achse nach Anspruch 15, **dadurch gekennzeichnet, daß** die Sicherungseinrichtung lösbar vorgesehen ist.

17. Verwendung einer Achse nach einem der vorangehenden Ansprüche, **dadurch gekennzeichnet, daß** die Achse (1) bzw. Welle in einem Transportband als Antriebs- und/oder Führungsachse bzw. Antriebswelle vorgesehen ist.

18. Verwendung nach Anspruch 17, **dadurch gekennzeichnet, daß** die Achse (1) bzw. Welle in einer Lebensmittel verarbeitenden Anlage vorgesehen ist.

19. Verwendung nach Anspruch 17 oder 18, **dadurch gekennzeichnet, daß** die Hülse (6), die Achse bzw. Welle vor allem in einem Zwischenraum zwischen diesen reinigbar ausgebildet ist.
